Europäisches Patentamt

European Patent Office

Office européen des brevets

(19)

(11) **EP 0 843 446 A2**

(12) **EUROPÄISCHE PATENTANMELDUNG**

(43) Veröffentlichungstag:
20.05.1998 Patentblatt 1998/21

(51) Int. Cl.⁶: **H04L 25/493**

(21) Anmeldenummer: 97118038.5

(22) Anmeldetag: 17.10.1997

(84) Benannte Vertragsstaaten:
**AT BE CH DE DK ES FI FR GB GR IE IT LI LU MC NL PT SE**
Benannte Erstreckungsstaaten:
**SI**

(30) Priorität: **14.11.1996 DE 19647041**

(71) Anmelder:
**Ziegler, Horst Prof. Dr.
D-33100 Paderborn (DE)**

(72) Erfinder:
**Ziegler, Horst Prof. Dr.
D-33100 Paderborn (DE)**

(74) Vertreter:
**Matschkur, Lindner Blaumeier
Patent- und Rechtsanwälte
Dr.-Kurt-Schumacher-Strasse 23
90402 Nürnberg (DE)**

(54) **Optische Übertragung mit Pulspositionskodierung**

(57) Verfahren zum Übertragen von aus einzelnen Datenbytes gebildeten Daten über ein optischen Übertragungssystem von einem Sender an einen Empfänger, wobei der Sender zur Übertragung der durch Datenbits, die das Datenbyte bilden, kodierten Information eines Datenbytes und gegebenenfalls weiterer, datenbytespezifischer und von einem oder mehreren Datenbits kodierter Zusatzinformation (z.B. Paritybit) in Abhängigkeit der Abfolge der Datenbits Licht emittiert, wobei die Information einer mehr als ein Datenbit umfassenden Datenbit-Gruppe eines Datenbytes durch den zeitlichen Abstand zweier vom Sender gegebener Lichtpulse kodiert wird.

FIG. 2

**Beschreibung**

Die Erfindung betrifft ein Verfahren zur Übertragung von aus einzelnen Datenbytes gebildeten Daten über ein optisches Übertragungssystem von einem Sender an einen Empfänger, wobei der Sender zur Übertragung der durch Datenbits, die das Datenbyte bilden, kodierten Information eines Datenbytes und gegebenenfalls weiterer, datenbytespezifischer und von einem oder mehreren Datenbits kodierter Zusatzinformation (z.B. Paritybit) in Abhängigkeit der Abfolge der Datenbits Licht emittiert.

In vielen Bereichen der Technik sollen Daten in optischer Form übertragen werden, was einerseits im sichtbaren Spektralbereich, bevorzugt aber im unsichtbaren, infraroten Spektralbereich erfolgt. Die Vorteile einer optischen Datenübertragung sind insbesondere in der elektrischen Isolation zwischen den kommunizierenden Teilnehmern, der Kontaktlosigkeit und damit dem schnellen Auf- und Abbau einer solchen optischen Kommunikationsverbindung zu sehen. Auch die geringen erforderlichen mechanischen Toleranzen bei der Kontaktierung, die wasser- und gasdichte Kapselbarkeit der Teilnehmer sowie die Funkenlosigkeit einer solchen Verbindung (Explosionsschutz) und vor allem die niedrigen Kosten einer solchen Verbindungsstrecke durch den Einsatz optoelektronischer Halbleiterbauelemente wie Leuchtdioden (LED) oder Photodioden beziehungsweise Phototransistoren stellen beachtliche Vorteile dar, die für eine optische Datenübertragung sprechen. Eine derartige optische Datenübertragung kann auf allen Gebieten Einsatz finden, unter anderem auch auf dem Gebiet elektronischer Verbrauchsmeßzähler wie Wasserzähler, Gaszähler, Elektrizitätszähler oder Wärmemengenzähler, um deren Meßergebnisse an eine geeignete Auslesestelle zu übertragen. Bisher bekannte Übertragungstechniken arbeiten mit einem bitstatischen Verfahren, bei dem das vom Sender gegebene Lichtsignal abwechselnd ein- und ausgeschaltet wird, abhängig von der Information eines Datenbytes, welche von der Abfolge der das Datenbyte bildenden Datenbits kodiert ist. Dabei wechselt der Bitzustand zwischen „1" und „0", wobei diese Zustände im Rahmen der Übertragung dadurch ausgedrückt werden, daß eine „1" durch Dunkelheit, eine „0" dagegen durch ein Leuchten des Senders kodiert wiedergegeben wird. Dabei wird zwischen Sender und Empfänger eine feste Übertragungsrate (Baudrate) vereinbart. Die Kommunikation selbst erfolgt in der Regel der standard-seriellen Übertragungstechnik mit einem Startbit, acht Datenbits, einem Parity-Bit, und einem Stopbit pro Datenbyte. Nachteilig bei dieser Übertragungstechnik ist einerseits die hohe Empfindlichkeit, mit welcher der Empfänger arbeiten muß, da er die bitstatischen Pegel erkennen können muß, die je nach Datenbitfolge fast während der gesamten Bytedauer entweder „0" oder „1" sein können, weshalb er mit quasi statischen Detektorschwellen arbeiten muß. Eine hohe Empfindlichkeit drückt sich in einem hohen Detektionswiderstand aus, was aber nachteilig für die Übertragungsgeschwindigkeit ist. Darüber hinaus begrenzen Dunkelströme und Fremdlicht die realisierbare Empfindlichkeit weiter. Infolgedessen kann diese Übertragungstechnik in der Regel nur dann eingesetzt werden, wenn der Empfänger, beispielsweise in Form eines Auslesekopfes, direkt auf das Gerät aufgesetzt wird. Dies führt aber dazu, daß die Übertragungsentfernung sehr klein ist. Nachteilig ist ferner der hohe Strombedarf, der bedingt durch das lange Leuchten, welches im Extremfall die gesamte Bytedauer anhalten kann, hervorgerufen wird.

Eine diesbezügliche Verbesserung sieht demgegenüber vor, daß der Sender, also beispielsweise die Leuchtdiode, dann, wenn eine „0" zu übertragen wäre, nicht für die gesamte Bitdauer leuchtet, sondern nur während eines kleinen Bruchteils derselben, wobei aber der bitzellenspezifische Betrieb beibehalten wird. Hierdurch läßt sich einerseits Sendestrom sparen, zum andern kann durch den Pulsbetrieb der Leuchtdiode der Spitzenstrom und damit die Reichweite erhöht werden, da die Diode nur pulsförmig mit hohem Strom belastet wird und dadurch nicht überhitzt und zerstört wird. Nachteilig ist aber bei diesem Verfahren, daß der Empfänger eine extrem hohe Zeitgenauigkeit benötigt, um die kurzen Impulse zum richtigen Zeitpunkt sicher abzutasten. Dies gilt insbesondere dann, wenn mit sehr kurzen Lichtpulsen im Bereich weniger Mikrosekunden gearbeitet wird. Die erforderliche Zeitsynchronität ist hier nur sehr schwer zu erreichen. Nachteilig ist ferner, daß pro Datenbyte (bestehend aus Startbit, acht Datenbits, Parity-Bit) im Extremfall, wenn alle Bitinhalte „0" sind, zehn Lichtpulse erzeugt und verarbeitet werden müssen.

Der Erfindung liegt demzufolge das Problem zugrunde, ein Übertragungsverfahren anzugeben, das einerseits eine Übertragung mit geringerem Strombedarf ermöglicht, auf der anderen Seite aber eine Erhöhung der Reichweite möglich ist.

Zur Lösung dieses Problems ist bei einem Verfahren der eingangs genannten Art erfindungsgemäß vorgesehen, daß die Information einer mehr als ein Datenbit umfassenden Datenbit-Gruppe eines Datenbytes durch den zeitlichen Abstand zweier vom Sender gegebener Lichtpulse kodiert wird.

Das erfindungsgemäße Verfahren geht also ab von der im Stand der Technik verwendeten Zeitfensterung der Datenbitübertragung, bei welcher jedem Bit ein bestimmtes Übertragungsfenster oder -zeitzellen zugeordnet ist. Vielmehr werden beim erfindungsgemäßen Verfahren die Informationsinhalte mehrerer Datenbits zu einer Gruppe zusammengefaßt und als Informationsmaß ein vorbestimmter Zeitabstand zwischen zwei vom Sender gegebener Lichtpulse gewählt. Da damit nicht für jedes Datenbit im Extremfall ein Lichtpuls gegeben werden muß, sondern nur ein Lichtpuls für eine aus mehreren Datenbits bestehende Gruppe, kann auf diese Weise der erforderliche Strombedarf deutlich verringert werden. Auf der anderen Seite ist es möglich, infolge der geringeren Häufigkeitsbelastung des Senders diesen mit entsprechend höheren Strömen anzusteuern, so daß eine Reichweitevergrößerung realisierbar ist. Ein weiterer Vorteil liegt darin, daß bei einem Verbindungsabbruch mitten im Byte nie fälschlicherweise ein Bitinhalt von „1" infolge der Dunkelheit des Senders detektiert wird, vielmehr wird ein solcher Fehlerzustand stets erkannt, da kein „Endpuls" zum „Startpuls" gegeben wird. Auch der Störeinfluß von Fremdlicht oder elektromagnetischer Störungen ist deutlich verringert, da jeder Störpuls sicher von Nutzdaten unterschieden werden kann.

In einer ersten Erfindungsausgestaltung ist vorgesehen, daß die Datenbit-Gruppe sämtliche Datenbits eines Datenbytes umfaßt und die Übertragung mittels lediglich zweier Lichtpulse erfolgt, deren zeitlicher Abstand die Kodierung der gesamten datenbytespezifischen Information ist. Bei diesem Verfahren werden also für jedes Datenbyte nur zwei Lichtpulse verwendet, was zu einer beachtlichen Verringerung des für die Übertragung erforderlichen Ladungsbedarfs führt.

Bei diesem zweiten Lichtpuls-Verfahren ist aber die erforderliche Zeitauflösung des Empfängers, welcher aus der gemessenen Signalabstandszeit den Informationsinhalt der Bit-Gruppe ermitteln muß, sehr hoch, weshalb dieses Verfahren besonders für stromsparende Datenübertragung geeignet ist, wenn durch geeignete Logik oder einen geeigneten Mikroprozessor mit Timer/Capture-Port diese Zeitmeßgenauigkeit preisgünstig erreichbar ist. Um die Anforderungen hinsichtlich der Zeitauflösung zu verringern, sieht eine zweckmäßige Erfindungsalternative vor, daß jedes Datenbyte in mehrere Datenbit-Gruppen, vorzugsweise in drei Datenbits umfassende Datenbit-Gruppen, geteilt wird, wobei die Übertragung mittels eines gemeinsamen Start-Lichtpulses und jeweils eines bitgruppenspezifischen Lichtpulses erfolgt. Dieses die Information quasi zergliedernd übertragende Verfahren, welches - abhängig von der Anzahl der das Datenbyte bildenden Datenbits - mit einer Byteunterteilung in zwei, drei oder vier Datenbit-Gruppen arbeiten kann, ist hinsichtlich des erforderlichen Strombedarfs immer noch vorteilhaft, da auch hier nur mit einer geringen Anzahl von Lichtpulsen (im Drei-Gruppenfall beispielsweise vier Lichtpulse) arbeitet, zum andern aber dabei die Anforderungen an die erforderliche Zeitgenauigkeit geringer sind.

In weiterer Erfindungsausgestaltung kann vorgesehen sein, daß ein einem vorhergehenden Lichtpuls folgender Lichtpuls frühestens nach Ablauf des theoretisch längsten, sich aus der, gegebenenfalls aufsummierten Zeitkodierung ergebenden Zeitintervalls zwischen dem Start-Lichtpuls und dem oder den jeweils vorhergehenden Lichtpulsen gegeben wird, so daß die zeitliche Übertragungsdauer des gesamten Datenbytes unabhängig von der bytespezifischen Information konstant bleibt. Auf diese Weise wird für den Empfänger ein zeitlicher Bezug gesetzt, anhand welchem eine sichere Ermittlung des Dateninhalts möglich ist, was insbesondere dann der Fall ist, wenn erfindungsgemäß die Zeitkodierung der datenbitspezifischen Information jeder Datenbit-Gruppe mittels eines von der Datenbitabfolge abhängigen Zahlenwertes und damit multiplikativ zu verknüpfenden Zeitkonstanten erfolgt, da in Verbindung mit der konstant bleibenden maximalen Übertragungsdauer die Zeitkonstante ermittelbar ist, basierend auf welcher dann der konkret gemessene Pulsabstand, welcher bei der erfindungsgemäßen Zeitkodierung ein Vielfaches der Zeitkonstanten ist, bestimmbar ist.

Um sowohl im Zwei-Puls-Fall wie auch im Mehr-Puls-Fall zu verhindern, daß dann, wenn sämtliche Datenbits derart in ihrem Datenwert sind, daß der Extremfall eintritt, daß der zweite Lichtpuls unmittelbar nach dem ersten gegeben werden müßte, ist auf Basis der Erfindung ferner vorgesehen, daß zwischen zwei Lichtpulsen ein vorbestimmter Zeit-Offset gegeben ist, der stets gegeben wird, so daß für eine hinreichende Erkennbarkeit auch dieses Informationsgehaltes Rechnung getragen ist. Dabei kann der Zeit-Offset in Form eines vorbestimmten Zahlenwertes, der mit der Zeitkonstanten multiplikativ zu verknüpfen ist, additiv zur ermittelten Zeitkodierung eingehen. Als Zeitkonstante wird vorteilhaft die Übertragungstaktzeit des Senders, welche von einem Taktgenerator vorgegeben ist, gewählt, wobei es sich als besonders vorteilhaft erwiesen hat, wenn die Zeitkonstante und damit die Übertragungstaktzeit eine Periode eines Uhrenquarzes mit einer Frequenz von 32768 Hz ist, da ein derartiger Uhrenquarz in der Regel ohnehin bereits meßgeräteseitig vorliegt.

Für eine sichere Erfassung der zeitkodierten Information hat es sich im Rahmen der Erfindung desweiteren als vorteilhaft erwiesen, wenn zur Ermittlung der kodierten Information der Empfänger mit der gleichen Übertragungstaktzeit wie der Sender arbeitet, da in diesem Fall die im Rahmen der Zeiterfassung ermittelten Empfängertakte unmittelbar denen des Senders entsprechen und eine direkte Ermittlung des Kodierungs-Zahlenwertes möglich ist. Erforderlich ist dann lediglich noch die Definition des Offsets seitens des Empfängers. Um aber auch dann, wenn das Sender- und Empfängersystem keine genügend genauen Taktgeber für die gewünschte Zeitkonstante, also die Übertragungstaktzeit haben, eine sichere Ermittlung der Zeitkonstanten seitens des Empfängers zu ermöglichen, kann im Rahmen der Erfindung ferner vorgesehen sein, daß der Empfänger die Übertragungstaktzeit des Senders durch Division des gemessenen zeitlichen Abstandes durch den maximalen Zahlenwert (gegebenenfalls einschließlich des Zahlenwerts des Zeit-Offsets), welcher mit der Zeitkonstanten multipliziert die konstante Übertragungsdauer des Datenbytes ergibt, ermittelt. In diesem Fall wird durch die einfache Division des zwischen Sender und Empfänger definierten maximalen Zahlenwertes die Ermittlung der Zeitkonstanten ermöglicht, basierend auf welcher anschließend die Ermittlung des Informationsgehaltes möglich ist. Da abhängig von dem sich ergebenden, der konstanten maximalen Übertragungszeit des Datenbytes zugrundeliegenden Zahlenwertes eine Division durch eine ungerade Zahl im Bereich des möglichen liegt, was aber für Kleinst-Mikroprozessoren hinreichend aufwendig sein kann, sieht die Erfindung ferner vor, daß der zeitliche Abstand zwischen zwei aufeinanderfolgenden Start-Lichtpulsen unabhängig von der maximalen, sich aus der Zeitkodierung ergebenden Übertragungsdauer des Datenbytes derart verlängert wird, daß er sich durch Multiplikation des Übertragungszeittaktes des Senders mit einem geraden Zahlenwert ergibt, wobei dieser dann Grundlage für die prozessorseitige Taktermittlung ist.

Der bitabfolgespezifische Zahlenwert kann erfindungsgemäß aus dem Intervall zwischen $[0;(2^N)$ -1] gewählt werden, wobei N die Anzahl der das Datenbyte bildenden Datenbits ist. Der für die Bestimmung des Zeit-Offsets verwendete Zahlenwert wird dagegen erfindungsgemäß aus dem Intervall zwischen [2; 10], insbesondere zu vier gewählt.

Die Erfindung betrifft desweiteren ein Datenübertragungssystem zur Übertragung von Daten aus einem an einer einen Fluidstrom erfassenden Zähleinrichtung, insbesondere einem Wasserzähler angeordneten Sender zu einem an einer Ausleseeinrichtung angeordneten Empfänger, wobei dieses Datenübertragungssystem dadurch gekennzeichnet ist, daß der Sender und der Empfänger zur Übertragung und Erfassung der datenspezifischen Information nach einem Verfahren der Ansprüche 1 bis 15 ausgebildet sind.

Weitere Vorteile, Merkmale und Einzelheiten der Erfindung ergeben sich aus den in folgenden beschriebenen Ausführungsbeispielen sowie anhand der Zeichnungen. Dabei zeigen:

Fig. 1    ein Helligkeit-Zeit-Diagramm hinsichtlich der Lichtpulsfolge des erfindungsgemäßen Zwei-Puls-Verfahrens,

Fig. 2    ein Helligkeit-Zeit-Diagramm hinsichtlich der Lichtpulsfolge des erfindungsgemäßen Vier-Puls-Verfahrens,

Fig. 3    ein Helligkeit-Zeit-Diagramm hinsichtlich einer bitstatischen Datenübertragung gemäß dem Stand der Technik, und

Fig. 4    ein Helligkeit-Zeit-Diagramm eines gepulsten, bitzellenstatischen Übertragungsverfahrens gemäß dem Stand der Technik.

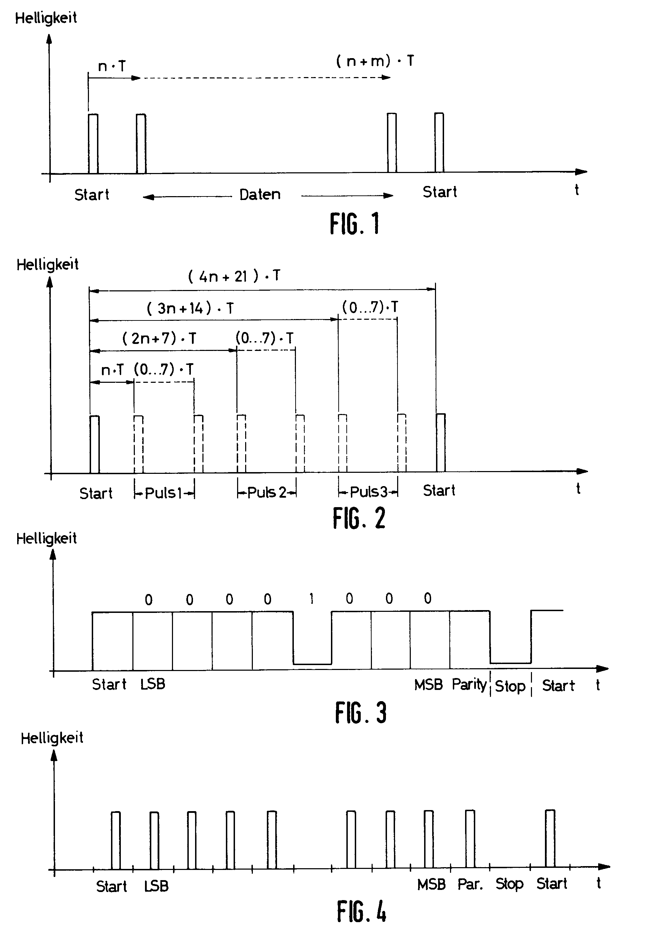

Zum besseren Verständnis werden zunächst die Fig. 3 und 4, die den nachteiligen Stand der Technik wiedergeben, kurz erläutert. In Fig. 3 ist ein Helligkeit-Zeit-Diagramm hinsichtlich eines bitstatischen Übertragungsverfahrens wiedergegeben. Gezeigt ist die Übertragung eines Datenbytes, bestehend aus einem Startbit, acht Datenbits, einem Paritybit und einem Stopbit, wonach sich das nächste Datenbyte mit seinem Startbit anschließt. Die Datenbits haben im gezeigten Beispiel die Wertigkeit (0,0,0,0,1,0,0,0). Infolge des bitstatischen Übertragungsverfahrens, bei dem eine „0" durch ein Leuchten des Senders, eine „1" dagegen durch Dunkelheit des Senders kodiert übermittelt wird, ergibt sich der in Fig. 3 gezeigte Helligkeitszustandsverlauf, wonach der Sender lediglich dann, wenn das fünfte Datenbit mit der „1" übertragen wird und beim Stopbit dunkel ist. Dies führt zum eingangs beschriebenen hohen Strombedarf, zum anderen zu Schwierigkeiten hinsichtlich der erforderlichen Detektorschwellen seitens des Empfängers, um die einzelnen Bitzustände sauber erkennen zu können.

In Fig. 3 ist das bitzellenstatische Pulsverfahren gemäß dem Stand der Technik wiedergegeben, bei dem die Bitzellenstruktur beibehalten wird, jedoch der Sender nicht während der gesamten Bitzellendauer im Falle der Übertragung einer „0" leuchtet, sondern nur einen bestimmten Bruchteil, wobei bevorzugt 3/16 einer Bitzeit verwendet werden, jedoch auch Pulszeiten in Bereich weniger Mykrosekunden verwendet werden können. Zwar führt dies zu einer Verringerung des Strombedarfs, da eben nicht während der gesamten Bitzellenzeit der Sender leuchtet jedoch sind noch hinreichend viele Lichtpulse erforderlich.

Demgegenüber steht zum einen das in Fig. 1 gezeigte Zwei-Puls-Verfahren. Auch dort ist längs der Ordinate die Helligkeit des Senders, also sein Leuchtzustand, aufgetragen, längs der Abszisse die Zeit t. Die Erfindung beruht darauf, anstatt die insgesamt N Nutz-Daten-Bits, wie in den Fig. 3 und 4 gezeigt, in Form von bitstatischen Signalen oder Lichtpulsen zu vorgegebenen Zeitpunkten, nämlich den feststehenden Bitzellen zu übertragen, erfindungsgemäß den Zeitabstand zwischen der Anstiegsflanke des Startimpulses und in diesem Fall eines zweiten Lichtpulses abhängig von dem Dateninhalt der Nutzdatenbits zwischen einem Minimal- und einen Maximalabstand zu variieren. Dabei zeigt Fig. 3 den einfachsten Fall der Kodierung eines Datenbytes mit transparentem Paritybit in Form eines einzigen Impulspaares dar. Hierbei verändert sich der der Zeitkodierung zugrundeliegende Zahlenwert zwischen 0 und 511, bedingt durch die sich aus den unterschiedlichen Kombinationen der „0" und „1"-Werte der einzelnen Binärdatenbits ergebenden Kombinationsmöglichkeiten, oder allgemeiner zwischen 0 und $(2^N)$-1. Jedem dieser 511 möglichen Dateninhaltswerte wird also ein Zeitabstand zugeordnet, welcher proportional diesem Zahlenwert ist. Die Proportionalitätskonstante entspricht einer Zeitkonstanten, welche bevorzugt dem Übertragungszeittakt einer Periode eines Uhrenquarzes mit einer Frequenz von 32768 Hz entspricht. Diese Zeitkonstante gibt damit die Anforderungen an die Genauigkeit der Zeitintervallerzeugung beim jeweiligen Sender und der Zeitintervallmessung beim jeweiligen Empfänger wieder.

Im gezeigten Ausführungsbeispiel beträgt die Zeit zwischen dem Startpuls und dem nachfolgenden Datenpuls $t = (n+m) \cdot T$. Dabei ist T die Zeitkonstante, in diesem Fall der Übertragungszeittakt des Uhrenquarzes, m der Wert der Zahl des zu übertragenden Datenbytes (0...511) und n ein Offset, der auch bei einem Dateninhalt $m = 0$ einen Mindestabstand zwischen den beiden Lichtpulsen sicherstellt. Dieser Verfahrensablauf ist in Fig. 1 wiedergegeben. Gezeigt ist der Startimpuls, nach welchem frühestens nach Ablauf einer Zeit $t = n \cdot T$ der Datenpuls gegeben werden kann. Für diesen existiert ein „Zeitfenster" beginnend mit $t = n \cdot T$ und endend zum Zeitpunkt $t = (n + m) \cdot T$. Der nächste Startpuls wird wiederum nach Ablauf des Zeit-Offsets $n \cdot T$ gegeben. Die Kodierung des Datenbytes ergibt sich nun aus dem zeitlichen Abstand zwischen dem Startpuls und dem Datenpuls, welcher zu jedem beliebigen, abhängig vom Informationsgehalt bestimmten Zeitpunkt innerhalb des „Zeitfensters" gegeben wird.

Entscheidend hierbei ist, daß einerseits nur die schnelle Anstiegsflanke beim Empfänger eine Rolle spielt. Da es nur noch auf die Zeitdifferenz zwischen zwei elektrisch identischen Flanken ankommt, heben sich analog-elektrische Verzögerungen durch einen langsamen Signalanstieg automatisch heraus. Bei diesem einfachen Zwei-Puls-Verfahren benötigt man vorteilhaft nur zwei Lichtpulse, so daß sich bei sonst gleichen Randbedingungen wie im Stand der Technik der maximale Ladungsbedarf für die Übertragung eines Bytes mit vorgegebener Peak-Intensität und damit vorgegebener Reichweite um einen beachtlichen Faktor erniedrigt.

Im gezeigten Ausführungsbeispiel beträgt die relative Zeitgenauigkeit als Bruchteil der Übertragungszeit eines Bytes weniger als T/2 von $519 \cdot T$, wenn angenommen wird, daß der Offset $n = 4$ beträgt, so daß die gesamte Zeit zwischen zwei Startpulsen $t = (2n + 511) \cdot T$ ist. In diesem Fall muß also die Zeitgenauigkeit besser als 1 Promille der Gesamtzeit sein. Realistische Beispiele der Zeitkonstanten/Übertragungstaktzeit sind $T = 30,5 \, \mu s$, was der Periode eines üblichen Uhrenquarzes mit 32768 Hz entspricht. Dann benötigt ein Byte ein Übertragungszeit von rund 15,83 ms, was einer Baudrate beim üblichen UART- Protokoll von etwa 700 Baud entspricht.

Ein geringere Anforderungen an die Zeitmeßgenauigkeit stellendes Verfahrens zeigt Fig. 4. Bei diesem werden die das Datenbyte bildende neun Datenbits in insgesamt drei Datenbit-Gruppen zu je drei Datenbits aufgeteilt. Hierdurch verändert sich nun der zu kodierende Datenwertbereich je Bit-Tribel auf (0...7). Der Gesamtablauf einer Übertragung eines Bits besteht dann aus

Startbit: definiert den Zeitbeginn

erstes Datenbit: im Zeitabstand $(n + m_1) \cdot T$ nach dem Startbit ($m_1 = 0...7$)

zweites Datenbit: im Zeitabstand $(2n + 7 + m_2) \cdot T$ nach dem Startbit ($m_2 = 0...7$)

drittes Datenbit: im Zeitabstand $(3n + 14 + m_3) \cdot T$ nach dem Startbit ($m_3 = 0...7$)

nächstes Startbit: im Zeitabstand $(4n + 21) \cdot T$ nach dem letzten Startbit.

Diese einfachen Regeln stellen sicher, daß bei jedem Dateninhalt der Mindestabstand zwischen zwei Lichtpulsen (auch eines Folgebytes) stets $n \cdot T$ bleibt, und daß jeder Datenpuls sich in einem nicht überlappenden eigenen Zeitfenster bewegt. Da $n = 4$ zweckmäßig ist, ist dann der (Mindest)-abstand zwischen zwei Datenbytes $37 \cdot T$. Die Übertragungsdauer je Byte beträgt in diesem Fall dann 1,13 ms, was fast genau die Übertragungsdauer für ein normal kodiertes Byte bei 9600 Baud (1,15 ms) entspricht. Die erforderliche Zeitgenauigkeit ist in diesem Fall wesentlich geringer als beim Zwei-Puls-Verfahren.

Um nun empfängerseitig die kodierte Information ermitteln zu können, muß der Empfänger die gemessenen Signale dann verarbeiten, wenn er nicht über denselben Zeittakt verfügt, da ansonsten die von ihm gezählten Takte den senderseitigen entsprechen und damit eine direkte Ermittlung des Kodierungs-Zahlenwertes möglich ist. Im anderen Fall erfolgt die Ermittlung aus dem Zeitabstand zwischen zwei Startimpulsen, welcher sich bei ($n = 4$) in jedem Fall zu $37 \cdot T$ ergibt, da er insoweit konstant ist. Durch Division des Zeitabstandes durch 37 kann damit der Empfänger ohne weiteres den Übertragungszeittakt T ermitteln und damit letztlich den Kodierungs-Zahlenwert bestimmen. Erforderlich ist lediglich, den Offset n zu definieren. Für den Fall, daß empfängerseitig ein einfacher Kleinst-Mikroprozessor vorgesehen ist, für den eine Division durch eine ungerade Zahl (37) bereits aufwendig ist, kann der Start des nächsten Datenbytes auf einen größeren Zeitabstand von beispielsweise $64 \cdot T$ verschoben werden, da sich eine Division der gezählten schnellen Prozessortakte des Empfängers zwischen zwei Startbits durch 64 einfacher (z. B. mit einem Schieberegister) durch ein Rechtsschieben um sechs Bit entsprechend einer Division durch $2^6 = 64$ realisieren läßt. In diesem Fall sinkt allerdings die Datenübertragungsrate entsprechend dem Verhältnis 37/64.

Ein weiterer Vorteil des Vier-Puls-Verfahrens unter Verwendung eines Übertragungszeittaktes $T = 30,5 \, \mu s$ (= 1/32768 Sekunden) und der sich daraus ergebenden, annähernd der Übertragungszeit eines klassischen Datenbytes mit Startbit, acht Datenbits, Paritybit und Stopbit bei 9600 Baud entsprechenden Übertragungszeit liegt nun darin, daß hier ohne zusätzliche Daten-Pufferung zum Beispiel im optischen Empfängerkopf eines Auslesegerätes direkt eine Umsetzung in ein konventionell kodiertes Baud-Signal mit den üblichen Baud-Raten möglich ist.

**Patentansprüche**

1. Verfahren zum Übertragen von aus einzelnen Datenbytes gebildeten Daten über ein optischen Übertragungssystem von einem Sender an einen Empfänger, wobei der Sender zur Übertragung der durch Datenbits, die das Datenbyte bilden, kodierten Information eines Datenbytes und gegebenenfalls weiterer, datenbytespezifischer und von einem oder mehreren Datenbits kodierter Zusatzinformation (z.B. Paritybit) in Abhängigkeit der Abfolge der Datenbits Licht emittiert, dadurch gekennzeichnet, daß die Information einer mehr als ein Datenbit umfassenden Datenbit-Gruppe eines Datenbytes durch den zeitlichen Abstand zweier vom Sender gegebener Lichtpulse kodiert wird.

2. Verfahren nach Anspruch 1, dadurch gekennzeichnet, daß die Datenbit-Gruppe sämtliche Datenbits eines Datenbfles umfaßt und die Übertragung mittels lediglich zweier Lichtpulse erfolgt, derer zeitlicher Abstand die Kodierung der gesamten datenbytespezifischen Information ist.

3. Verfahren nach Anspruch 1, dadurch gekennzeichnet, daß jedes Datenbyte in mehrere Datenbit-Gruppen, vorzugsweise in drei Datenbits umfassende Datenbit-Gruppen, geteilt wird, wobei die Übertragung mittels eines gemeinsamen Start-Lichtpulses und jeweils eines bitgruppenspezifischen Lichtpulses erfolgt.

4. Verfahren nach Anspruch 3, dadurch gekennzeichnet, daß ein einem vorhergehenden Lichtpuls folgender Lichtpuls frühestens nach Ablauf des theoretisch längsten, sich aus der, gegebenenfalls aufsummierten Zeitkodierung ergebenden Zeitintervalls zwischen dem Start-Lichtpuls und dem oder den jeweils vorhergehenden Lichtpulsen gegeben wird, so daß die zeitliche Übertragungsdauer des gesamten Datenbytes unabhängig von der bytespezifischen Information konstant bleibt.

5. Verfahren nach einem der vorangehenden Ansprüche, dadurch gekennzeichnet, daß die Zeitkodierung der datenbitspezifischen Information jeder Datenbit-Gruppe mittels eines von der Datenbitabfolge abhängigen Zahlenwertes und einer damit multiplikativ zu verknüpfenden Zeitkonstanten erfolgt.

6. Verfahren nach einem der vorangehenden Ansprüche, dadurch gekennzeichnet, daß zwischen zwei Lichtpulsen ein vorbestimmter Zeit-Offset gegeben ist.

7. Verfahren nach Anspruch 6, dadurch gekennzeichnet, daß der Zeitoffset in Form eines vorbestimmten Zahlenwertes, der mit der Zeitkonstanten multiplikativ zu verknüpfen ist, additiv zur ermittelten Zeitkodierung eingeht.

8. Verfahren nach einem der Ansprüche 5 bis 7, dadurch gekennzeichnet, daß die Zeitkonstante die Übertragungstaktzeit des Senders ist.

9. Verfahren nach einem der Ansprüche 5 bis 8, dadurch gekennzeichnet, daß die Zeitkonstante und damit die Übertragungstaktzeit eine Periode eines Uhrenquarzes mit einer Frequenz von 32768 Hz ist.

10. Verfahren nach einem der Ansprüche 5 bis 9, dadurch gekennzeichnet, daß zur Ermittlung der kodierten Information der Empfänger mit dergleichen Übertragungstaktzeit wie der Sender arbeitet.

11. Verfahren nach einem der Ansprüche 5 bis 9, dadurch gekennzeichnet, daß zur Ermittlung der kodierten Information der Sender und der Empfänger mit verschiedenen Übertragungstaktzeiten arbeiten, wobei der Empfänger die Übertragungstaktzeit des Senders durch rechnerische Verarbeitung des gemessenen zeitlichen Abstands der Lichtpulse ermittelt.

12. Verfahren nach Anspruch 11, dadurch gekennzeichnet, daß der Empfänger die Übertragungstaktzeit des Senders durch Division des gemessenen zeitlichen Abstands durch den maximalen Zahlenwert (gegebenenfalls einsachließlich des Zahlenwerts des Zeit-Offsets), welcher mit der Zeitkonstanten multipliziert die konstante Übertragungsdauer des Datenbytes ergibt, ermittelt.

13. Verfahren nach Anspruch 12, dadurch gekennzeichnet, daß der zeitliche Abstand zwischen zwei aufeinanderfolgenden Start-Lichtpulsen unabhängig von der maximalen, sich aus der Zeitkodierung ergebenden Übertragungsdauer des Datenbytes derart verlängert wird, daß er sich durch Multiplikation des Übertragungszeittaktes des Senders mit einem geraden Zahlenwert ergibt.

14. Verfahren nach einem der Ansprüche 5 bis 13, dadurch gekennzeichnet, daß der bitabfolgespezifische Zahlenwert aus dem Intervall zwischen $[0;(2^N)-1]$ gewählt wird, wobei N die Anzahl der das Datenbyte bildenden Datenbits ist.

15. Verfahren nach einem der Ansprüche 7 bis 14, dadurch gekennzeichnet, daß der für die Bestimmung des Zeit-Offsets verwendete Zahlenwert aus dem Intervall zwischen [2; 10], insbesondere zu 4 gewählt wird.

16. Datenübertragungssystem zum Übertragen von Daten von einem an einer einen Fluidstrom erfassenden Zähleinrichtung, insbesondere einem Wasserzähler angeordneten Sender zu einem an einer Ausleseeinrichtung angeordneten Empfänger, dadurch gekennzeichnet, daß der Sender und der Empfänger zur Übertragung und Erfassung der datenspezifischen Information nach einem Verfahren der Ansprüche 1 bis 15 ausgebildet sind.

FIG. 1

FIG. 2

FIG. 3

FIG. 4